# EUROPEAN PATENT APPLICATION

(11) **EP 4 596 460 A1**
(43) Date of publication of application: **06.08.2025**
(21) Application number: 24211897.4
(22) Date of filing: 08.11.2024
(51) Int. Cl.: B65G 21/18, B65G 23/24

(54) **APPARATUS FOR CONVEYING PRODUCTS**

(30) Priority: 10.11.2023 IT 202300004677 U
(71) Applicant: BETT SISTEMI s.r.l., 41012 Carpi (Modena) (IT)
(72) Inventor: BETTATI, Tienno, 41012 CARPI (MO) (IT)
(74) Representative: Fanzini, Valeriano

(57) **Abstract**

An apparatus (10) for conveying products, especially of the so-called spiral type to convey the respective product between different height levels, comprises support means (12), means (14) for conveying the product, in particular in the form of a conveyor belt (14), preferably of the type having links (141) articulated with one another, means (16) for towing said means (14) for conveying the product, in particular comprising toothed wheel means (161) meshing with corresponding portions of the links of said conveyor belt (14), and means (18) for actuating said towing means (16). Said means (18) for actuating said towing means (16) of said means (14) for conveying the product comprise elongated, closed-loop means (181), which are movable in rotation according to the extension or elongation direction of the same elongated means (181).

## Description

The present invention relates to an apparatus for conveying products.

Apparatuses for conveying products of the so-called spiral type are known, to convey the respective product between different height levels, and comprising at least one corresponding coil, in particular a plurality of coils in succession with each other, in which the respective coil is defined by a corresponding curvilinear stretch extending in height of the same belt, preferably winding according to a helical, or substantially helical, path.

Said already-known spiral apparatuses generally comprise support means for means to convey the product, in particular in the form of a conveyor belt, preferably of the type having links articulated with one another, towing means of said means for conveying the product, in particular comprising toothed wheel means meshing with corresponding portions of the links of said conveyor belt, and means for actuating said towing means.

However, these already-known conveying apparatuses have the drawback of an assembly that is somewhat uncomfortable and therefore not very fast.

Furthermore, with these already-known conveying apparatuses, there is excessive rigidity in positioning the components of said towing means of said means for conveying the product which is the towing of the same.

Therefore, the present invention aims to propose a new and alternative solution to the solutions known so far and, in particular, seeks to obviate one or more of the drawbacks or problems mentioned above and/or to meet one or more of the needs mentioned above, and/or in any case felt in the field, and in particular, evident from the above.

An apparatus for conveying products is thus provided for; especially, the conveying apparatus being of the so-called spiral type to convey the respective product between different height levels, and comprising at least one corresponding coil, in particular a plurality of coils in succession with each other, in which the respective coil is defined by a corresponding curvilinear stretch extending in height of the same belt, preferably winding according to a helical, or substantially helical, path; the apparatus comprising support means, means for conveying the product, in particular in the form of a conveyor belt, preferably of the type having links articulated with one another, towing means of said means for conveying the product, in particular comprising toothed wheel means meshing with corresponding portions of the links of said conveyor belt, and means for actuating said towing means; characterized in that said means for actuating said towing means of said means for conveying the product comprise elongated, closed-loop means, which are movable in rotation according to the extension or elongation direction of the same elongated means.

In this manner, it is possible to perform an easier and faster assembly of said conveying apparatus, and a greater flexibility is further achieved in positioning the components of said towing means of said means for conveying the product which is the towing of the same.

This and other novel aspects, or respective advantageous implementations, are anyhow set forth in the attached claims, the specific technical features of which can be found, together with corresponding advantages achieved, in the following description, illustrating in detail a merely exemplary, non-limiting embodiment of the invention, which is given with reference to the attached drawings, in which:

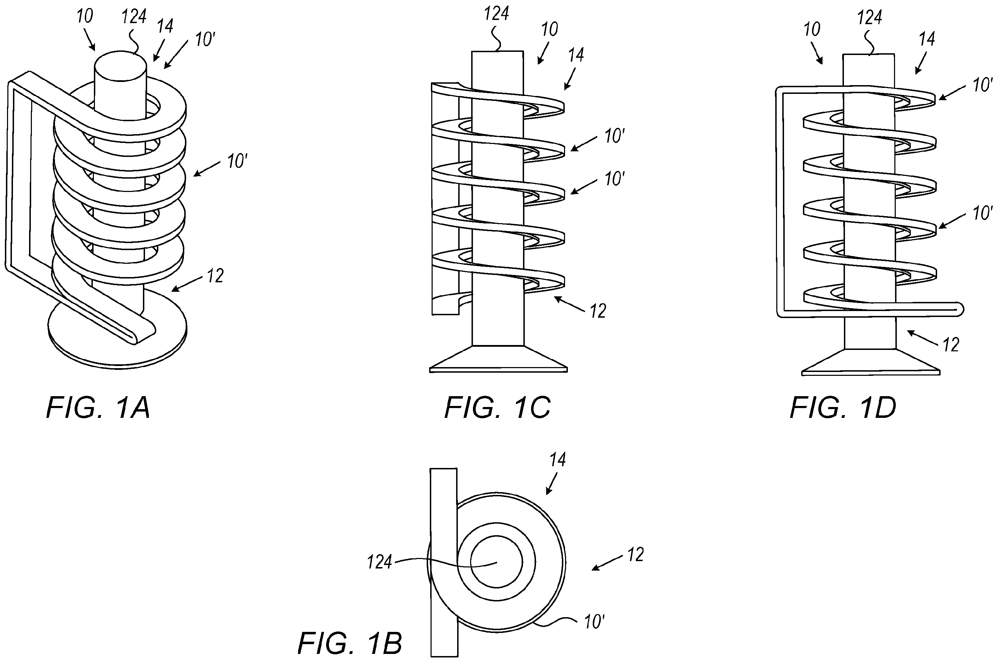

- Figs. 1A to 1D illustrate, in respective schematic views, respectively in perspective, top plan, front elevation, and side elevation, a preferred implementation of apparatus according to the present invention;

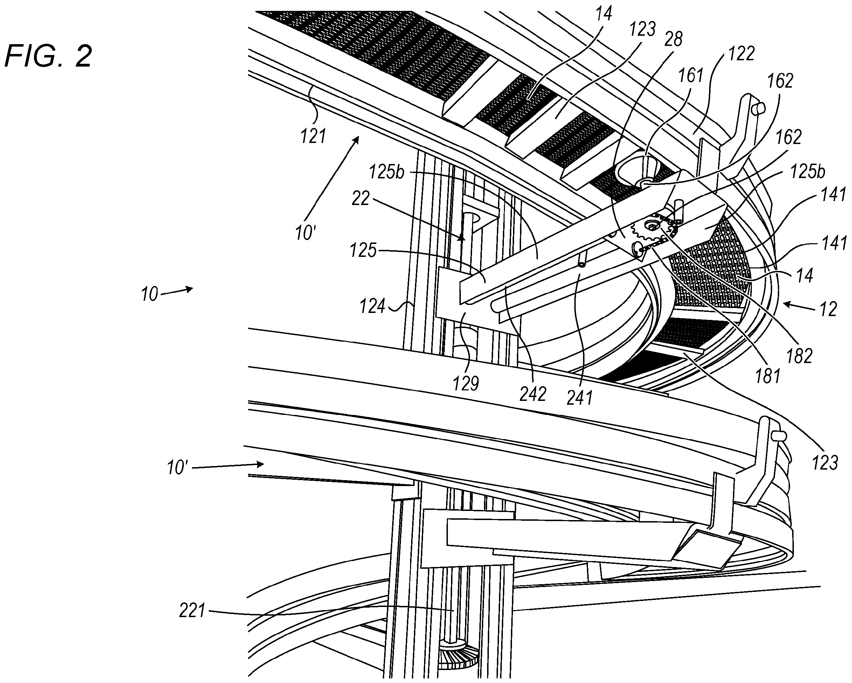

- Fig. 2 illustrates a perspective, schematic view of a part of the preferred implementation of apparatus according to the present invention;

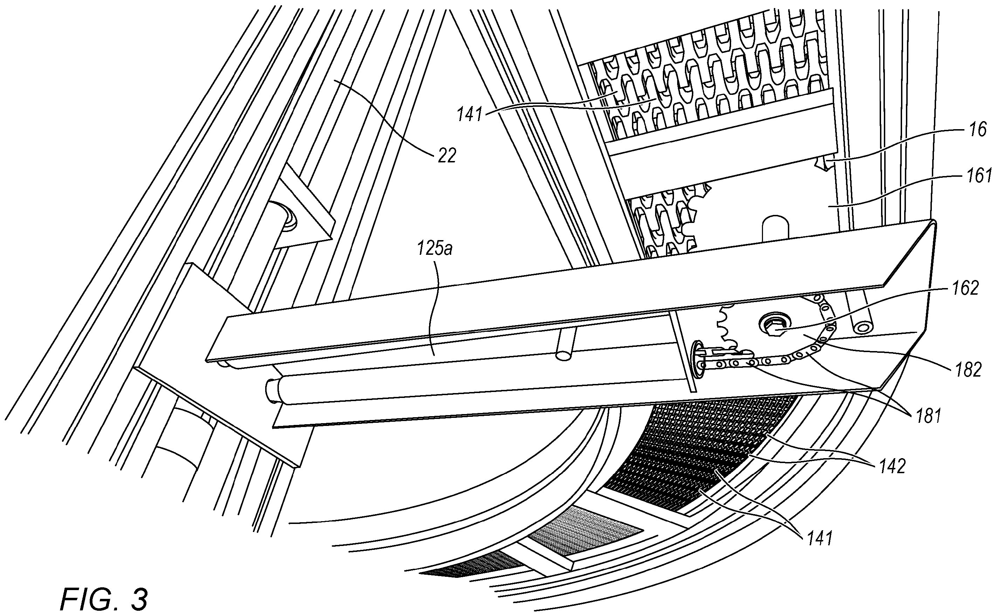

- Fig. 3 illustrates a perspective, schematic view of an enlarged detail of the preferred implementation of apparatus according to the present invention, in particular illustrating said elongated, closed-loop means, or chain;

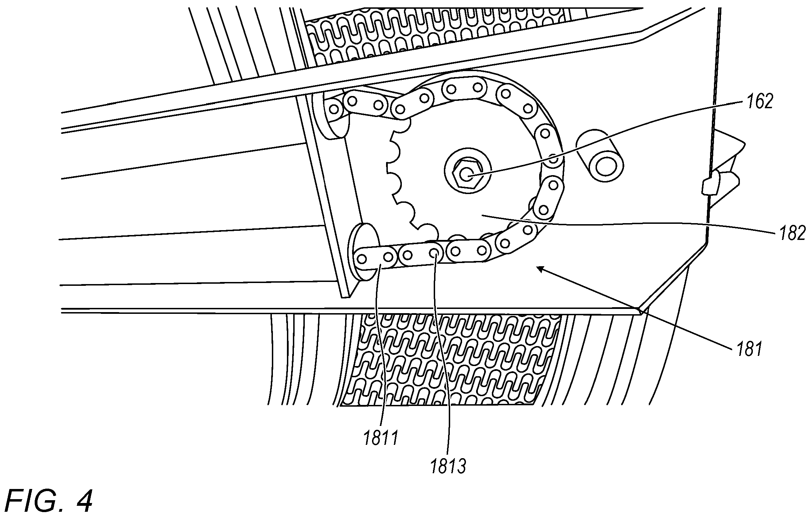

- Fig. 4 illustrates a perspective, schematic view in even more magnified detail of the preferred implementation of apparatus according to the present invention, in particular illustrating said driven rotating member, or toothed wheel;

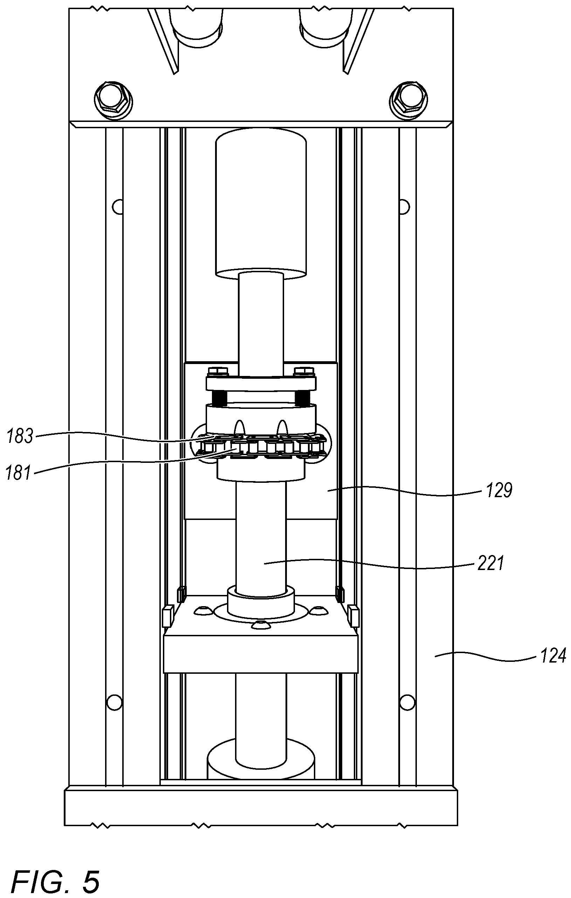

- Fig. 5 illustrates a perspective, schematic view of the preferred implementation of apparatus according to the present invention, in particular illustrating the driving rotating member, or toothed wheel.

A preferred implementation of apparatus 10 for conveying products is illustrated in the attached Figures.

Especially, the conveying apparatus10 is of the so-called spiral type to convey the respective product between different height levels, and comprises at least one corresponding coil, in particular a plurality of coils 10' in succession with each other, in which the respective coil is defined by a corresponding curvilinear stretch extending in height of the same belt, preferably winding according to a helical, or substantially helical, path.

Therefore, as illustrated, the apparatus 10 comprises support means 12, in particular for means 14 for conveying the product, in particular in the form of a conveyor belt 14, preferably of the type having links 141 articulated with one another, especially defined by corresponding elements or shaped blocks made of plastic material connected to each other through corresponding transversal or horizontal pins, and which however are not particularly illustrated in the attached Figures.

As can be seen from said Figure, the apparatus 10 further comprises, in particular supported by said support means 12, means 16 for towing said means 14 for conveying the product, in turn in particular comprising toothed wheel means 161 meshing with corresponding portions, or teeth, of the links of said conveyor belt 14, and especially with corresponding portions, or teeth, 142, perpendicularly extending, in particular inferiorly, from these links 141, as well as corresponding means 18 for actuating said towing means 16.

With advantage, as illustrated, said means 18 for actuating said towing means 16 of said means 14 for conveying the product comprise elongated, closed-loop means 181, which are movable in rotation according to the extension or elongation direction of the same elongated means 181.

In this manner, it is possible to perform an easier and faster assembly of said conveying apparatus, and a greater flexibility is further achieved in positioning the components of said towing means of said means for conveying the product which is the towing of the same.

As can be seen from said Figures, advantageously, said elongated, closed-loop means 181 are in the form of a corresponding articulated, closed-loop chain 181, in particular in metal material comprising a plurality of links or flat pieces 1811 articulated with each other through corresponding connecting pins 1813.

In any case, it must be understood that, while the present chain is a particularly preferred embodiment, according to another embodiment, it could also be envisaged to use a corresponding belt as the elongated, closed-loop means, in particular of the toothed type.

In this manner, by virtue of the positioning freedom that such elongated means allow, an easier and faster assembly of said conveying apparatus can be thus performed, and a greater flexibility is further achieved in positioning the corresponding components of said towing means of said means for conveying the product which is the towing of the same.

As can be seen from said Figures, with appreciable advantage, said means 18 for actuating said towing means 16 comprise a driven rotating member 182 and a driving rotating member, 183 operatively connected with one another through said elongated, closed-loop means 181, which are in particular adapted to transmit a corresponding moto between, especially directly between, the same driven 182 and driving 183 members.

In an advantageous manner, as can be seen from said Figures, said driven rotating member 182 and driving rotating member 183 are defined by corresponding toothed, respectively driven and driving, wheels 182, 183 meshing with said articulated chain 181 closed in a loop 181.
[1.] As can be seen from said Figures, advantageously, said support means 12 comprise support lateral sideboards 121, 122, spaced apart from each other, in particular transversally with respect to the extension direction of the conveying means, in particular connected with one another through corresponding crosspieces 123, and between which said means, or belt, 14 for conveying the product extend.

As can be seen from said Figures, with advantage, said support lateral sideboards 121, 122 extend according to a helical, or substantially helical, path.

In a particularly advantageous manner, as can be seen from said Figures, means for guiding said means, or belt, 14 for conveying the product are provided for, however not particularly illustrated in the attached Figures, which guide means are in particular carried by said support lateral sideboards 121, 122, in particular at the inner faces thereof.

As can be seen from said Figures, advantageously, said support means 12 also comprise a support, in particular central, column 124, i.e., centrally positioned inside the spiral conveyor, especially at the space central thereto.

As can be seen from said Figures, in an advantageous manner, said support means 12 comprise one or more rods 125, in particular radial rods, for backing said support lateral sideboards 121, 122.

In an appreciably advantageous manner, as can be seen from said Figures, the respective rod 125 for backing said support lateral sideboards 121, 122 back said elongated, closed-loop means, or chain, 181 and/or said driven rotating member, or driven toothed wheel, 182.

As can be seen from said Figures, advantageously, the respective rod 125 for backing said support lateral sideboards 121, 122 extends below the support lateral sideboards 121, 122.

As can be seen from said Figures, in a particularly advantageous manner, the respective rod 125 for backing said support lateral sideboards 121, 122 has a preferably planar, especially horizontal, or substantially horizontal, core, 125a, in particular at which, preferably below which, said elongated, closed-loop means are arranged, i.e., said chain 181 is arranged, and/or said driven rotating member is arranged, or said toothed wheel, 182, is arranged.

With appreciable advantage, as can be seen from said Figures, said respective rod 125 for backing said support lateral sideboards 121, 122 comprises a perpendicular fin, in particular a first and a second opposite perpendicular fins 125b, 125b, which preferably extends, or extend, in particular facing downwardly, from a preferably planar, especially horizontal, or substantially horizontal, core, 125a, in particular from the respective side end thereof.

As can be seen from said Figures, advantageously, said elongated, closed-loop means, or chain, 181 are, or is, arranged next to the respective perpendicular fin, in particular between said first and second opposite perpendicular fins 125b, 125b.

As can be seen from said Figures, in an appreciably advantageous manner, said driven rotating member, or driven toothed wheel, 182, is arranged next to the respective perpendicular fin, in particular between said first and second opposite perpendicular fins 125b, 125b, in particular at an outermost part thereof.

With advantage, as can be seen from said Figures, the respective rod 125 for backing said support lateral sideboards 121, 122 extends from, in particular radially, and is supported by, said support column, in particular a central support column, 124.

As can be seen from said Figures, advantageously, said means 16 for towing said means 14 for conveying the product comprise a corresponding toothed wheel 161, in particular arranged below said means, or belt, 14 for conveying the product.

As can be seen from said Figures, with appreciable advantage, said towing toothed wheel 161 is parallel to said means, or belt, 14 for conveying the product and/or is horizontal or substantially horizontal.

In an advantageous manner, as can be seen from said Figures, said towing toothed wheel 161 is operatively connected with said driven rotating member, or driven toothed wheel, 182.

As can be seen from said Figures, advantageously, said towing toothed wheel 161 is integrally connected through a corresponding small shaft 162 with said driven rotating member, or driven toothed wheel, 182, in particular which said small shaft 162 carries, at the opposite ends, said driven rotating member, or driven toothed wheel, 182 and said towing toothed wheel 161.

In an appreciably advantageous manner, as can be seen from said Figures, said driven rotating member, or driven toothed wheel, 182 is parallel to said towing toothed wheel 161.

As can be seen from said Figures, in an appreciably advantageous manner, primary actuation means, not particularly illustrated in the attached Figures, are provided for.

In a particularly advantageous manner, as can be seen from said Figures, said primary actuation means comprise a respective, in particular electrical, motor, especially supported and/or located in a position beneath said support means 12.

As can be seen from said Figures, advantageously, means 22 for transmitting the motion from said primary actuation means to said means 18 for actuating said towing means 16 are provided for.

As can be seen from said Figures, with appreciable advantage, said means 22 for transmitting the motion from said primary actuation means to said means 18 for actuating said towing means 16 comprise an elongated rotating shaft 221, in particular extending vertically, and preferably backed while being freely rotatable by, and/or at, said support column 124.

As can be seen from said Figures, advantageously, said small shaft 162 for the connection between said towing toothed wheel 161 and said driven rotating member, or driven toothed wheel, 182 is parallel or substantially parallel to, i.e., has a respective angle with respect to, said transmission elongated rotating shaft 221.

As can be seen from said Figures, with advantage, said elongated, closed-loop means 181 move, i.e., rotate, in a corresponding, in particular horizontal or substantially horizontal, plane.

With appreciable advantage, as can be seen from said Figures, said driven rotating member, or driven toothed wheel, 182 and/or said elongated, closed-loop means 181, and/or said driving rotating member, or said driving toothed wheel, 183 lie on the same, in particular horizontal or substantially horizontal, plane.

As can be seen from said Figures, advantageously, at, in particular inside, said support column 124, means 22, or shaft 221, for transmitting the motion from said primary actuation means are housed.

As can be seen from said Figures, in an advantageous manner, said driving rotating member, or driving toothed wheel, 183 is operatively connected with, i.e., coaxially mounted on, said central transmission shaft 241.

With advantage, as can be seen from said Figures, means 24 for covering said elongated, closed-loop means, or chain, 181 are provided for.

In this manner, it is possible to prevent material, such as lubricant, of the elongated means, particularly the chain, from soiling the conveyed product.

As can be seen from said Figures, advantageously, said means 24 for covering said elongated, closed-loop means, or chain, 181 comprise a first and a second elongated tubular members 241, 242, preferably in plastic material, which receive therein, or house, the respective forward and return branches, of said elongated, closed-loop means, or chain, 181.

As can be seen from said Figures, in a particularly advantageous manner, although not being particularly illustrated in the attached Figures, means for covering said driven rotating member, or driven toothed wheel, 182 are provided for.

In this manner, it is possible to prevent material, such as lubricant, of said driven rotating member, or in particular of the driven toothed wheel, from soiling the conveyed product.

In an advantageous manner, as can be seen from said Figures, said means for covering said driven rotating member, or driven toothed wheel, 182 comprise at least one corresponding panel, preferably in plastic material, in particular transparent, so as to allow to see and control at said member or wheel 182, and which preferably engages and is retained by said rod 125 for backing said support lateral sideboards 121, 122, in particular by the lower ends of the respective perpendicular fin, especially by said first and a second opposite perpendicular fins 125b, 125b.

As can be seen from said Figures, a transversal panel 28 dividing the extension zone of said elongated, closed-loop means, or chain, 181, advantageously, from the housing zone for said driven rotating member, or driven toothed wheel, 182 is provided for.

As can be seen from said Figures, in an appreciably advantageous manner, said transversal panel 28, dividing the extension zone of said elongated, closed-loop means, or chain, 181 from the housing zone for said driven rotating member, or driven toothed wheel, 182, is backed by a perpendicular fin, in particular by a first and a second opposite perpendicular fins 125b, 125b and/or by said preferably planar, especially horizontal, or substantially horizontal, core, 125a, of said rod 125 for backing said support lateral sideboards 121, 122.

In a particularly advantageous manner, as can be seen from said Figures, a plate 129 is provided, for the attachment of said rod 125 for backing said support lateral sideboards 121, 122 to said support column 124, in particular to which said rod 125 is welded.

Advantageously, as can be seen from said Figures, said first and second elongated tubular members 241, 242 for covering the corresponding branches of said elongated, closed-loop means, or chain, 181 extend between, and/or are supported by, said transversal panel 28 dividing the extension zone of said elongated, closed-loop means, or chain, 181 from the housing zone for said driven rotating member, or driven toothed wheel, 182, and/or by said plate 129 for the attachment of said rod 125 for backing said support lateral sideboards 121, 122 to said support column 124, especially with which the respective longitudinal end of said first and second elongated tubular members 241, 242 is respectively connected.

As can be seen from said Figures, with appreciable advantage, said elongated, closed-loop means, or chain, 181, i.e., the respective branches thereof, pass through corresponding holes obtained in said transversal panel 28, dividing the extension zone of said elongated, closed-loop means, or chain, 181 from the housing zone for said driven rotating member, or driven toothed wheel, 182, and/or in said plate 129 for the attachment of said rod 125 for backing said support lateral sideboards 121, 122 to said support column 124.

As can be seen from said Figures, with appreciable advantage, said driven rotating member, or driven toothed wheel, 182 is in height below said support lateral sideboards 121, 122, i.e., below the lower edge thereof.

In this manner, it is possible to avoid performing unnecessary machining on the respective support sideboard.

Advantageously, as can be seen from said Figures, said driven rotating member, or driven toothed wheel, 182 and/or said elongated, closed-loop means 181 and/or said driving rotating member, or said driving toothed wheel, 183 lie on the same, in particular horizontal or substantially horizontal, plane, which plane is in height below said support lateral sideboards 121, 122, i.e., below the lower edge thereof.

Advantageously, as can be seen from said Figures, said towing toothed wheel 161 and said driven rotating member, or driven toothed wheel, 182 are transversally arranged in a position which is included between said support lateral sideboards 121, 122, in particular in the proximity of the respective support lateral sideboard which is found on the outer side of the curve

In practice, as can be seen, the technical characteristics illustrated above allow, individually or in a respective combination, achieving one or more of the following advantageous results:
- it is possible to perform an easier and faster assembly of said conveying apparatus;
- a greater flexibility is further achieved in positioning the components of said towing means of said means for conveying the product which is the towing of the same;
- it is possible to prevent material, such as lubricant, of the elongated means, particularly the chain, from soiling the conveyed product;
- it is possible to prevent material, such as lubricant, of said driven rotating member, or in particular of the driven toothed wheel, from soiling the conveyed product;
- it is possible to avoid performing unnecessary machining on the respective support sideboard.

The present invention is clearly susceptible to industrial application. Those skilled in the art will be able to devise a number of modifications and/or variations to be made to the same invention, while falling within the scope of the inventive concept, as broadly set forth. Furthermore, those skilled in the art will be able to devise further preferred implementations of the invention that comprise one or more of the features illustrated above of the preferred implementation referred to above, in particular as set forth in the attached claims. Furthermore, it should also be understood that all details of the invention can be replaced by technically equivalent elements.

## Claims

1. An apparatus (10) for conveying products; especially the conveying apparatus (10) being of the so-called spiral type to convey the respective product between different height levels, and comprising at least one corresponding coil, in particular a plurality of coils (10') in succession with each other, wherein the respective coil is defined by a corresponding curvilinear stretch extending in height of the same belt, preferably winding according to a helical, or substantially helical, path; the apparatus (10) comprising support means (12), means (14) for conveying the product, in particular in the form of a conveyor belt (14), preferably of the type with links (141) articulated with one another, means (16) for towing said means (14) for conveying the product, in particular comprising toothed wheel means (161) meshing with corresponding portions of the links of said conveyor belt (14), and means (18) for actuating said towing means (16); **characterized in that** said means (18) for actuating said towing means (16) of said means (14) for conveying the product comprise elongated, closed-loop means (181), which are movable in rotation according to the extension or elongation direction of the same elongated means (181).

2. The apparatus according to claim 1, **characterized in that** said elongated, closed-loop means (181) are in the form of a corresponding articulated, closed-loop chain (181).

3. The apparatus according to any one of the preceding claims, **characterized in that** said means (18) for actuating said towing means (16) comprise a driven rotating member (182) and a driving rotating member, (183) operatively connected with one another through said elongated, closed-loop means (181).

4. The apparatus according to claim 3, **characterized in that** said driven rotating member (182) and driving rotating member (183) are defined by corresponding toothed driven and driving wheels (182, 183), respectively, meshing with said articulated chain (181) closed in a loop (181).

5. The apparatus according to any one of the preceding claims, **characterized in that** said support means (12) comprise support lateral sideboards (121, 122), spaced apart from each other and between which said means, or belt, (14) for conveying the product extends.

6. The apparatus according to claim 5, **characterized in that** said support lateral sideboards (121, 122) extend according to a helical, or substantially helical, path.

7. The apparatus according to any one of the preceding claims, **characterized in that** means for guiding said means, or belt, (14) for conveying the product are provided for, which guide means are in particular carried by said support lateral sideboards (121, 122).

8. The apparatus according to any one of the preceding claims, **characterized in that** said support means (12) comprise a support column (124), in particular a central support column.

9. The apparatus according to any one of the preceding claims, **characterized in that** said support means (12) comprise one or more rods (125), in particular radial, for backing said support lateral sideboards (121, 122).

10. The apparatus according to claim 9, **characterized in that** the respective rod (125) for backing said support lateral sideboards (121, 122) back said elongated, closed-loop means, or chain, (181) and/or said driven rotating member, or driven toothed wheel, (182).

11. The apparatus according to any one of the preceding claims 9 and 10, **characterized in that** the respective rod (125) for backing said support lateral sideboards (121, 122) extends below the support lateral sideboards (121, 122).

12. The apparatus according to any one of the preceding claims 9 to 11, **characterized in that** the respective rod (125) for backing said support lateral sideboards (121, 122) has a preferably planar, especially horizontal, or substantially horizontal, core, (125a), in particular at which, preferably below which, said elongated, closed-loop means are arranged, i.e., said chain (181) is arranged, and/or said driven rotating member is arranged, or said toothed wheel, (182) is arranged.

13. The apparatus according to any one of the preceding claims 9 to 12, **characterized in that** said respective rod (125) for backing said support lateral sideboards (121, 122) comprises a perpendicular fin, in particular a first and a second opposite perpendicular fins (125b, 125b), which preferably extends, or extend, in particular facing downwardly, from preferably planar, especially horizontal, or substantially horizontal, core, (125a), in particular from the respective side end thereof.

14. The apparatus according to claim 13, **characterized in that** said elongated, closed-loop means, or chain, (181) are, or is, arranged next to the respective perpendicular fin, in particular between said first and second opposite perpendicular fins (125b, 125b).

15. The apparatus according to any one of the preceding claims 13 and 14, **characterized in that** said driven rotating member, or driven toothed wheel, (182), is arranged next to the respective perpendicular fin, in particular between said first and second opposite perpendicular fins (125b, 125b), in particular at an outermost part thereof.

16. The apparatus according to any one of the preceding claims 9 to 15, **characterized in that** the respective rod (125) for backing said support lateral sideboards (121, 122) extends from, in particular radially, and is supported by said support, in particular central, column (124).

17. The apparatus according to any one of the preceding claims, **characterized in that** said means (16) for towing said means (14) for conveying the product comprise a corresponding toothed wheel (161), in particular arranged below said means, or belt, (14) for conveying the product.

18. The apparatus according to claim 17, **characterized in that** said towing toothed wheel (161) is parallel to said means, or belt, (14) for conveying the product and/or is horizontal or substantially horizontal.

19. The apparatus according to any one of the preceding claims 17 and 18, **characterized in that** said towing toothed wheel (161) is operatively connected with said driven rotating member, or driven toothed wheel, (182).

20. The apparatus according to claim 19, **characterized in that** said towing toothed wheel (161) is integrally connected through a corresponding small shaft (162) with said driven rotating member, or driven toothed wheel, (182), in particular which said small shaft (162) carries, at the opposite ends, said driven rotating member, or driven toothed wheel, (182) and said towing toothed wheel (161).

21. The apparatus according to any one of the preceding claims, **characterized in that** primary actuation means are provided for.

22. The apparatus according to claim 21, **characterized in that** said primary actuation means comprise a respective, in particular electrical, motor especially supported and/or located in a position beneath said support means (12).

23. The apparatus according to any one of the preceding claims 21 and 22, **characterized in that** means (22) for transmitting the motion from said primary actuation means to said means (18) for actuating said towing means (16) are provided for.

24. The apparatus according to claim 23, **characterized in that** said means (22) for transmitting the motion from said primary actuation means to said means (18) for actuating said towing means (16) comprise an elongated rotating shaft (221), in particular extending vertically, and preferably backed while being freely rotatable by, and/or at, said support column (124).

25. The apparatus according to any one of the preceding claims 3 to 24, **characterized in that** said driven rotating member, or driven toothed wheel, (182) is parallel to said towing toothed wheel (161).

26. The apparatus according to any one of the preceding claims 24 and 25, **characterized in that** said small shaft (162) for the connection between said towing toothed wheel (161) and said driven rotating member, or driven toothed wheel, (182) is parallel or substantially parallel to, i.e., has a respective angle with respect to, said transmission elongated rotating shaft (221).

27. The apparatus according to any one of the preceding claims 3 to 26, **characterized in that** said elongated, closed-loop means (181) move, i.e., rotate, in a corresponding, in particular horizontal or substantially horizontal, plane.

28. The apparatus according to any one of the preceding claims 3 to 27, **characterized in that** said driven rotating member, or driven toothed wheel, (182) and/or said elongated, closed-loop means (181) and/or said driving rotating member, or said driving toothed wheel, (183) lie on the same, in particular horizontal or substantially horizontal, plane.

29. The apparatus according to any one of the preceding claims 8 to 28, **characterized in that** at, in particular inside, said support column (124) said means (22), or shaft (221), for transmitting the motion from said primary actuation means are housed.

30. The apparatus according to any one of the preceding claims 3 to 29, **characterized in that** said driving rotating member, or driving toothed wheel, (183) is operatively connected with, i.e., coaxially mounted on, said central transmission shaft (241).

31. The apparatus according to any one of the preceding claims, **characterized in that** means (24) for covering said elongated, closed-loop means, or chain, (181) are provided for.

32. The apparatus according to claim 31, **characterized in that** said means (24) for covering said elongated, closed-loop means, or chain, (181) comprise a first and a second elongated tubular members (241, 242), preferably in plastic material, which receive therein, or house, the respective forward and return branches, of said elongated, closed-loop means, or chain, (181).

33. The apparatus according to any one of the preceding claims 3 to 32, **characterized in that** means for covering said driven rotating member, or driven toothed wheel, (182) are provided for.

34. The apparatus according to any one of the preceding claims 3 to 33, **characterized in that** said means for covering said driven rotating member, or driven toothed wheel, (182) comprise at least one corresponding panel, preferably in plastic material, in particular transparent, preferably which engages and is retained by said rod (125) for backing said support lateral sideboards (121, 122), in particular by the lower ends of the respective perpendicular fin, especially by said first and a second opposite perpendicular fins (125b, 125b).

35. The apparatus according to any one of the preceding claims 3 to 34, **characterized in that** a transversal panel (28) is provided for, dividing the extension zone of said elongated, closed-loop means, or chain, (181), from the housing zone for said driven rotating member, or driven toothed wheel, (182).

36. The apparatus according to claim 35, **characterized in that** said transversal panel (28), dividing the extension zone of said elongated, closed-loop means, or chain, (181) from the housing zone for said driven rotating member, or driven toothed wheel, (182), is backed by a perpendicular fin, in particular by a first and a second opposite perpendicular fins (125b, 125b) and/or by said preferably planar, especially horizontal, or substantially horizontal, core, (125a), of said rod (125) for backing said support lateral sideboards (121, 122).

37. The apparatus according to any one of the preceding claims 9 to 36, **characterized in that** a plate (129) for the attachment of said rod (125) for backing said support lateral sideboards (121, 122) to said support column (124) is provided for.

38. The apparatus according to any one of the preceding claims 35 to 37, **characterized in that** said first and second elongated tubular members (241, 242) for covering the corresponding branches of said elongated, closed-loop means, or chain, (181) extend between, and/or are supported by, said transversal panel (28) dividing the extension zone of said elongated, closed-loop means, or chain, (181) from the housing zone for said driven rotating member, or driven toothed wheel, (182) and/or by said plate (129) for the attachment of said rod (125) for backing said support lateral sideboards (121, 122) to said support column (124).

39. The apparatus according to any one of the preceding claims 35 to 38, **characterized in that** said elongated, closed-loop means, or chain, (181), i.e., the respective branches thereof, pass through corresponding holes obtained in said transversal panel (28), dividing the extension zone of said elongated, closed-loop means, or chain, (181) from the housing zone for said driven rotating member, or driven toothed wheel, (182), and/or in said plate (129) for the attachment of said rod (125) for backing said support lateral sideboards (121, 122) to said support column (124).

40. The apparatus according to any one of the preceding claims 3 to 39, **characterized in that** said driven rotating member, or driven toothed wheel, (182) is in height below said support lateral sideboards (121, 122), i.e., below the lower edge thereof.

41. The apparatus according to any one of the preceding claims, **characterized in that** said driven rotating member, or driven toothed wheel, (182) and/or said elongated, closed-loop means (181) and/or said driving rotating member, or said driving toothed wheel, (183) lie on the same plane, which plane is in height below said support lateral sideboards (121, 122), i.e., below the lower edge thereof.

42. The apparatus according to any one of the preceding claims, **characterized in that** said towing toothed wheel (161) and said driven rotating member, or driven toothed wheel, (182) are transversally arranged in a position which is included between said support lateral sideboards (121, 122), in particular in the proximity of the respective support lateral sideboard which is found on the outer side of the curve

43. An apparatus, **characterized in that** it is made according to any one of the preceding claims and/or as described and illustrated with reference to the attached drawings.
